# EUROPÄISCHE PATENTANMELDUNG

(11) **EP 1 413 594 A2**
(43) Veröffentlichungstag der Anmeldung: **28.04.2004**
(21) Anmeldenummer: 03017987.3
(22) Anmeldetag: 07.08.2003
(51) Int. Cl.: C08G 69/02, C08G 69/08, C08G 69/26

(54) **Laser-Sinter-Pulver mit verbesserten Recyclingeigenschaften, Verfahren zu dessen Herstellung und Verwendung des Laser-Sinter-Pulvers**

(30) Priorität: 17.10.2002 DE 10248407; 07.07.2003 DE 10330590
(71) Anmelder: Degussa AG, 40474 Düsseldorf (DE)
(72) Erfinder: Monsheimer, Sylvia, 45721 Haltern am See (DE); Grebe, Maik, 44805 Bochum (DE); Baumann, Franz-Erich, Dr., 48249 Dülmen (DE); Christoph, Wolfgang, 45768 Marl (DE); Schiffer, Thomas, Dr., 45721 Haltern am See (DE); Scholten, Heinz, Dr., 45721 Haltern am See (DE)

(57) **Zusammenfassung**

Die vorliegende Erfindung betrifft ein Sinterpulver, ein Verfahren zum Laser-Sintern sowie Formkörper, hergestellt aus diesem Sinterpulver.

Beim Lasersinterprozess entsteht ein blockartiger Körper, der zum einen aus den gewünschten Bauteilen besteht, zum anderen und meist überwiegenden Teil aus nicht belichtetem Pulver, welches bis zum Entformen bzw. Auspacken init den Bauteilen in diesem Block verbleibt. Das nicht belichtete Pulver kann nach Sieben und Zugabe von Neupulver in einem weiteren Bauprozess eingesetzt werden (Recycling).

Nicht belichtetes Sinterpulver gemäß dem Stand der Technik neigt unter den im Bauraum der Lasersintermaschine gegebenen Bedingungen (Temperatur, ggf. Restsauerstoffgehalt) zur Nachkondensation - in einzelnen Fällen auch zu unkontrollierter Abspaltung von Aminoendgruppen - und das zurückgewonnene Pulver zeigt eine deutlich erhöhte Lösungsviskosität und lässt sich nicht oder nur noch eingeschränkt im nächsten Bauprozess einsetzen.

Durch die erfindungsgemäße Zugabe von organischen Carbonsäuren als Reglern, lässt sich ein Polyamid-Pulver mit nahezu konstanter Lösungsviskosität herstellen, welches sich ohne Zugabe von Neupulver mehrfach im Laser-Sinter-Prozess einsetzen lässt.

## Beschreibung

Die Erfindung betrifft ein Laser-Sinter-Pulver auf Basis von geregeltem Polyamid, vorzugsweise Polyamid 12, ein Verfahren zur Verwendung dieses Pulvers sowie Formkörpem, hergestellt durch selektives Laser-Sintern von Laser-Sinter-Pulvern.

Die zügige Bereitstellung von Prototypen ist eine in der jüngsten Zeit häufig gestellte Aufgabe. Ein Verfahren, welches besonders gut für den Zweck des Rapid Prototyping geeignet ist, ist das Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren relativ schnell wieder zu einer festen Masse. Durch wiederholtes Belichten von immer neu aufgebrachten Schichten können mit diesem Verfahren komplexe dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in der Patentschriften US 6,136,948 und WO 96/06881 (beide DTM Corporation) beschrieben. Eine Vielzahl von Polymeren und Copolymeren wird für diese Anwendung beansprucht, wie Polyacetat, Polypropylen, Polyethylen, Ionomere und Polyamid 11.

Beim Lasersinterprozess entsteht ein blockartiger Körper, der zum einen aus den gewünschten Bauteilen besteht, zum anderen und meist überwiegenden Teil aus nicht belichtetem Pulver, sogenanntem Rückpulver, welches bis zum Entformen bzw. Auspacken mit den Bauteilen in diesem Block verbleibt. Es hat eine stützende Wirkung auf die Bauteile, so dass Überhänge und Hinterschnitte mit dem Lasersinterverfahren ohne Stützkonstruktionen realisierbar sind. Je nach Art des verwendeten Pulvers kann das nicht belichtete Pulver nach Sieben und Zugabe von Neupulver in einem weiteren Bauprozess eingesetzt werden (Recycling).

In der Praxis hat sich beim Laser-Sintern vor allem Polyamid 12-Pulver für die Herstellung von technischen Bauteilen bewährt. Die aus PA12-Pulver gefertigten Teile genügen hohen mechanischen Beanspruchungen und kommen damit in ihren Eigenschaften besonders nahe an die späteren Serienteile durch Spritzguss oder Extrusion heran.

Besonders gut geeignet ist dabei ein Polyamid 12 mit einer Schmelztemperatur von 185 - 189 °C, einer Schmelzenthalpie von 112 ± 17 kJ/mol und einer Erstarrungstemperatur von 138 - 143 °C, wie es in EP 0 911 142 beschrieben wird. Vorzugsweise werden dabei Pulver mit einer mittleren Korngröße von 50 bis 150 µm eingesetzt, wie man sie beispielsweise gemäß DE 197 08 946 oder auch DE 44 21 454 erhält.

Nachteilig beim Stand der Technik ist, dass die nicht belichteten Teile von eingesetztem Polyamid-Pulver unter den im Bauraum der Lasersintermaschine gegebenen Bedingungen (hohe Temperaturen, sehr niedrige Feuchte) zur Nachkondensation neigen.

Die zurückgewonnenen Polyamid-Pulver zeigen, wie eigene Untersuchungen ergeben haben, eine deutlich erhöhte Lösungsviskosität und lassen sich nur noch eingeschränkt im nächsten Bauprozess einsetzen.

Um gleichbleibend gute Ergebnisse beim Laser-Sintern zu erzielen, wird gemäß dem Stand der Technik das zurückgewonnene Pulver stets mit erheblichen Mengen an Neupulver vermischt. Die erforderlichen Mengen an Neupulver sind erheblich höher als die für die Bauteile verbrauchten Mengen. Daher entsteht ein Überschuss an Rückpulver, der nicht wieder verwendet werden kann und entsorgt werden muss. Gerade bei filigranen Bauteilen fallen auf diese Weise erhebliche Mengen an Rückpulver an, die sich nicht mehr in weiteren Bauprozessen einsetzen lassen.

Aufgabe der vorliegenden Erfindung war es deshalb ein Laser-Sinter-Pulver bereitzustellen, welches geeignet ist, durch Zugabe von geringen Mengen Neupulver oder sogar ohne Zusatz von Neupulver direkt wieder als Laser-Sinter-Pulver eingesetzt zu werden und damit die anfallende Menge an Rückpulver, welches entsorgt werden muss, zu verringern.

Überraschenderweise wurde nun gefunden, dass sich durch Zugabe von Reglern, insbesondere von organischen Carbonsäuren zu Polyamiden, Polyamid-Pulver mit nahezu konstanter Lösungsviskosität herstellen lassen und dass Laser-Sinter-Pulver, welche diese geregelten Polyamide aufweisen, ohne Zugabe von Neupulvern oder mit nur geringer Zugabe von Neupulvern mehrfach im Laser-Sinter-Prozess eingesetzt werden können.

Gegenstand der vorliegenden Erfindung ist deshalb ein Sinterpulver zum selektiven Laser-Sintern, welches dadurch gekennzeichnet ist, dass es ein Polyamid mit einem Carboxylendgruppenüberschuss, ein sogenanntes geregeltes Polyamid, aufweist.

Ebenso ist Gegenstand der vorliegenden Erfindung ein Verfahren zur Herstellung von Formkörpern durch selektives Laser-Sintern von Sinterpulver, welches dadurch gekennzeichnet ist, dass ein Sinterpulver, welches Polyamid mit einem Carboxylendgruppenüberschuss, ein sogenanntes geregeltes Polyamid aufweist, eingesetzt, wird.

Außerdem sind Gegenstand der vorliegenden Erfindung Formkörper, hergestellt durch selektives Laser-Sintern, welche dadurch gekennzeichnet sind, dass sie ein geregeltes Polyamid aufweisen.

Das erfindungsgemäße Sinterpulver hat den Vorteil, dass es als Rückpulver nur mit geringen Mengen Neupulver vermischt, oder sogar unvermischt direkt wieder zum Laser-Sintern eingesetzt werden kann. Auf Grund dieser hervorragenden Recycling-Qualitäten, ist eine Entsorgung von Rückpulvern häufig nicht mehr notwendig.

Die hervorragenden Recycling-Qualitäten beruhen unter anderem darauf, dass bei thermischer Belastung keine Zunahme der Lösungsviskosität erfolgt. Dies hängt vermutlich damit zusammen, dass das erfindungsgemäße im erfindungsgemäßen Sinterpulver vorhandene geregelte Polyamid weniger zur Nachkondensation neigt als ungeregelte Polyamide. Das Phänomen der Nachkondensation gilt prinzipiell für alle Polymere, die durch Kondensation entstanden sind, also Polyester, Polyamide etc.. PA ist in dieser Hinsicht besonders reaktiv: Es wurde festgestellt, dass bei annähernd gleicher Anzahl an Carboxyl- und Aminoendgruppen Nachkondensation eintreten kann und damit die Lösungsviskosität des Polyamids verändert wird. Unkontrollierte Nebenreaktionen bewirken ferner ausweislich der Endgruppentitration des Gebrauchtpulvers in vielen Fällen einen überstöchiometrischen Verlust an Aminogruppen gegenüber Carboxylgruppen, was als Indiz für thermooxidative Vernetzungsreaktionen gewertet wird, die die Fließfähigkeit des Gebrauchtpulvers weiter beeinträchtigen.

Herkömmliche, zum Laser-Sintern eingesetzte Neupulver besitzen eine Lösungsviskosität nach ISO 307 von ungefähr ηᵣₑₗ = 1,6. Durch die thermische und thermooxidative Beanspruchung (Nachkondensation + Vernetzung) beim Laser-Sintern über eine Bauzeit von mehreren Stunden - im Extremfall einigen Tagen - zeigt das nicht belichtete Sinterpulver (Rückpulver) in vielen Fällen schlechtere Fließeigenschaften und beim direkten Einsatz dieses Rückpulvers beim Laser-Sintern treten vermehrt Fehlstellen und unerwünschte Poren in den hergestellten Formkörpern auf. Die Formkörper zeigen eine raue und eingefallene Oberfläche (Orangenhaut) und weisen deutlich schlechtere mechanische Eigenschaften bezüglich Reißdehnung, Zugfestigkeit und Elastizitätsmodul sowie eine verringerte Dichte auf.

Um einwandfreie und spezifikationsgerechte Bauteile in gleichbleibender Qualität zu erhalten, muss das Rückpulver gemäß dem Stand der Technik mit nicht unerheblichen Mengen an Neupulver vermischt werden. Üblicherweise wird das Rückpulver in Mengen von 20 - 70 % beim nächsten Bauprozess wiederverwendet. Enthält das Rückpulver zusätzlich Füllstoffe, wie zum Beispiel Glaskugeln, lassen sich üblicherweise maximal 50 % des Rückpulvers einsetzen. Um die oben erwähnte Orangenhaut sicher ausschließen zu können, empfiehlt beispielsweise die Firma EOS in ihrer Produktinformation (Materialdatenblatt "Feinpolyamid PA 2200 für EOSINT P", Stand März 2001) ein Verhältnis von Rückpulver zu Neupulver von 1 : 1, maximal von 2 : 1.

Das erfindungsgemäße Sinterpulver ist deutlich unempfindlicher gegen die thermische Beanspruchung bei Laser-Sintern und kann deshalb als Rückpulver direkt oder aber mit deutlich geringeren Beimischungen an Neupulver erneut beim Laser-Sintern eingesetzt werden. Dies gilt auch für den Fall, dass das Sinterpulver Füllstoffe aufweist. In all diesen Fällen zeigt das erfindungsgemäße Sinterpulver deutlich verbesserte Recycling-Eigenschaften. Ein besonderer Vorteil liegt insbesondere darin, dass das Sinterpulver vollständig rückgeführt werden kann.

Die Wiederverwendung von thermisch gealtertem erfindungsgemäßen Pulver ist auch deshalb sehr gut möglich, weil überraschenderweise bei der thermischen Alterung von erfindungsgemäßem Pulver keine Abnahme der Rekristallisationstemperatur, ja sogar in vielen Fällen ein Anstieg der Rekristallisationstemperatur festgestellt werden kann. Dadurch wird bei der Verbauung von gealtertem erfindungsgemäßem Pulver ein nahezu gleiches Kristallisationsverhalten erreicht wie mit Neupulver. Bisher übliches gealtertes Pulver kristallisiert erst bei deutlich niedrigeren Temperaturen als Neupulver, weshalb beim Verbauen von Altpulver Einfallstellen auftreten.

Ein weiterer Vorteil des erfindungsgemäßen Sinterpulvers liegt darin, dass es sich in beliebigen Mengen (0 bis 100 Teile) mit einem herkömmlichen Laser-Sinter-Pulver auf Basis von ungeregeltem Polyamid mischen lässt. Das erhaltene Pulvergemisch zeigt gegenüber dem Sinterpulver auf Basis von ungeregeltem Polyamid einen verminderten Anstieg der Lösungsviskosität und damit ebenfalls eine verbesserte Recyclierbarkeit.

Das erfindungsgemäße Sinterpulver sowie ein Verfahren, bei dem dieses Pulver eingesetzt wird, wird nachfolgend beschrieben, ohne dass die Erfindung darauf beschränkt sein soll.

Das erfindungsgemäße Sinterpulver zum selektiven Laser-Sintern, zeichnet sich dadurch aus, dass es ein Polyamid mit einem Carboxylendgruppenüberschuss, ein sogenanntes geregeltes Polyamid, aufweist. Es kann vorteilhaft sein, wenn der Carboxylendgruppenüberschuss zumindest 20 mmol/kg beträgt.

Die chemische Analyse eines im Laser-Sinter-Prozess thermisch belasteten, herkömmlichen Pulvers zeigt eine deutliche Erhöhung der Lösungsviskosität, bedingt durch einen Molekulargewichtsaufbau sowie eine überstöchiometrische Abnahme der Aminoendgruppen im Verhältnis zu den umgesetzten Carboxylendgruppen. Dieses wird zum Einen dadurch erklärt, dass unter den Bedingungen des Laser-Sintern freie Amino- und Carboxylendgruppen im Polyamid-Pulver miteinander unter Wasserabspaltung reagieren können, die sogenannte Nachkondensation. Die Abnahme der Aminofunktionen beruht zum Zweiten auf der thermooxidativen Abspaltung dieser Gruppen mit nachfolgender Vernetzung. Der Regler bewirkt bei der Polymerisation, dass die Anzahl der freien Aminoendgruppen reduziert wird. Deshalb liegen im erfindungsgemäß zu verwendenden Polyamid Carboxylendgruppen im Überschuss vor.

Durch den erfindungsgemäßen Überschuss an Carboxylendgruppen im Polyamid des Sinterpulvers konnte die Erhöhung der Lösungsviskosität sowie thermooxidativer Endgruppenverlust von Polyamiden in erfindungsgemäßen Sinterpulvern deutlich reduziert, beziehungsweise vermieden werden.

Vorzugsweise weist das erfindungsgemäße Sinterpulver ein Polyamid auf, welches vorzugsweise 0,01 Teile bis 5 Teile, bevorzugt 0,1 bis 2 Teile einer Mono- oder Dicarbonsäure als Regler aufweist.

Das erfindungsgemäße Sinterpulver weist besonders bevorzugt ein Polyamid auf, welches ein Verhältnis von Carboxylendgruppe zu Aminoendgruppe von 2 : 1 oder größer aufweist. Der Gehalt an Aminoendgruppen in diesem Polyamid kann unter 40 mmol/kg, vorzugsweise unter 20 mmol/kg und ganz bevorzugt unter 10 mmol/kg liegen. Die Lösungsviskosität des Polyamids beträgt vorzugsweise nach ISO 307 von 1,4 bis 2,0, besonders bevorzugt von 1,5 bis 1,8.

Das Sinterpulver kann auch eine Mischung aus geregeltem und ungeregeltem Polyamid aufweisen. Vorzugsweise weist das Sinterpulver eine Mischung aus geregeltem und ungeregeltem Polyamid auf, wobei der Anteil an geregeltem Polyamid in der Mischung von 0,1 bis 99,9 %, vorzugsweise von 5 bis 95 % und ganz besonders bevorzugt von 10 bis 90 % beträgt. Dadurch, dass das Sinterpulver auch eine Mischung aus geregeltem und ungeregeltem Sinterpulver aufweisen kann, hat ein Anwender der Sinterpulver die Möglichkeit, bei Bedarf Altbestände an ungeregeltem Sinterpulver oder ungeregeltes Rückpulver weiter zu nutzen.

Prinzipiell sind alle Polyamide als geregelte Polyamide in den Sinterpulvern einsetzbar. Es kann aber vorteilhaft sein, wenn das Sinterpulver ein geregeltes Polyamid 12 oder Polyamid 11 aufweist. Insbesondere kann es vorteilhaft sein, wenn das Sinterpulver gefälltes Polyamid 12 aufweist. Die Herstellung von gefälltem Polyamid 12 kann z. B. DE 29 06 647 entnommen werden. Besonders bevorzugt weist das erfindungsgemäße Sinterpulver Polyamid 12 Fällpulver mit runder Kornform auf, wie sie z. B. gemäß DE 197 08 946 oder DE 44 21454 hergestellt werden können. Ganz besonders bevorzugt weisen die erfindungsgemäßen Sinterpulver, ein geregeltes Polyamid 12 mit einer Schmelztemperatur von 185 bis 189 °C, einer Schmelzenthalpie von 112 ± 17 kJ/mol und einer Erstarrungstemperatur von 138 bis 143 °C, wie es ungeregelt in EP 0 911 142 beschrieben wird, auf.

Das erfindungsgemäße Sinterpulver weist vorzugsweise Polyamid mit einer mittleren Partikelgröße d₅₀ von 10 bis 250 µm, vorzugsweise von 30 bis 100 µm und ganz besonders bevorzugt von 40 bis 80 µm auf.

Das erfindungsgemäße geregelte Sinterpulver weist bevorzugt nach einer Wärmealterung des Pulvers eine Rekristallisationstemperatur (Rekristallisationspeak in der DSC) und/oder eine Kristallisationsenthalpie auf, die sich nicht zu kleineren Werten gegenüber dem Neupulver verschiebt. Unter Wärmealterung wird dabei ein Aussetzen des Pulvers für wenige Minuten bis mehrere Tage einer Temperatur im Bereich der Rekristallisationstemperatur bis wenige Grade unterhalb der Schmelzetemperatur verstanden. Eine typische künstliche Alterung kann z. B. bei einer Temperatur, die mit einer Abweichung von ca. plusminus 5 K der Rekristallisationstemperatur entspricht, für 5 bis 10, vorzugsweise für 7 Tage erfolgen. Eine Alterung beim Verbauen des Pulvers erfolgt typischerweise bei einer Temperatur von 1 bis 15, vorzugsweise von 3 bis 10 K unterhalb der Schmelzetemperatur für wenige Minuten bis zu zwei Tagen, je nachdem wie lange die Bauzeit für das jeweilige Bauteil beträgt. Die Wärmealterung geschieht beim Lasersintern dadurch, dass Pulver, welches beim schichtweisen Aufbau des dreidimensionalen Objekts nicht vom Laserstrahl erfasst wird, während des Bauvorgangs im Bauraum Temperaturen von nur wenigen Grad unterhalb der Schmelzetemperatur ausgesetzt werden. Bevorzugtes erfindungsgemäßes geregeltes Sinterpulver weist nach Wärmealterung des Pulvers eine Rekristallisationstemperatur (einen Rekristallisationspeak) und/oder eine Kristallisationsenthalpie auf, die sich zu größeren Werten hin verschiebt. Vorzugsweise verschieben sich sowohl die Rekristallisationstemperatur als auch die Kristallisationsenthalphie zu größeren Werten. Ganz besonders bevorzugt weist ein erfindungsgemäßes Pulver, welches als Neupulver eine Rekristallisationstemperatur größer 138 °C aufweist, eine Rekristallisationstemperatur als Altpulver, welches durch Alterung für 7 Tage bei 135 °C erhalten wurde, auf, die von 0 bis 3, vorzugsweise von 0,1 bis 1 K über der Rekristallisationstemperatur des Neupulvers liegt.

Das Sinterpulver kann neben zumindest einem geregelten Polyamid zumindest einen weiteren Füllstoff aufweisen. Solche Füllstoffe können z. B. Glas-, Metall- oder Keramikpartikel sein. Insbesondere kann das Sinterpulver Glaskugeln, Stahlkugeln oder Metallgries als Füllstoffe aufweisen.

Die Füllstoffpartikel weisen dabei vorzugsweise eine kleinere oder ungefähr gleich große mittlere Partikelgröße wie die Partikel der Polyamide auf. Vorzugsweise sollte die mittlere Partikelgröße d₅₀ der Füllstoffe die mittlere Partikelgröße d₅₀ der Polyamide um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Schichtdicke in der jeweiligen Laser-Sinter-Apparatur.

Das erfindungsgemäße Sinterpulver wird vorzugsweise durch das im Folgenden beschriebene Verfahren zur Herstellung eines Sinterpulvers hergestellt. Bei diesem Verfahren wird ein Sinterpulver auf Basis eines Polyamids hergestellt, wobei ein Polyamid eingesetzt wird, welches geregelt ist, das heißt, dass es einen Carboxylendgruppenüberschuss aufweist. Es wurde überraschend gefunden, dass man ein vollständig rückführbares Sinterpulver erhält, welches in den Baueigenschaften nahezu einem Neupulver entspricht, wenn man für die Pulverherstellung des Neupulvers von einem Basispolyamid mit einem Carboxylendgruppenüberschuss ausgeht. Dieses Polyamid weist vorzugsweise von 0,01 Teile bis 5 Teile, bevorzugt 0,1 bis 2 Teile einer Mono- oder Dicarbonsäure als Regler auf. Vorzugsweise weist das geregelte Polyamid ein Verhältnis von Carboxylendgruppe zu Aminoendgruppe von 2 : 1 oder größer, vorzugsweise von 5 : 1 bis 500 : 1 und besonders bevorzugt von 10 : 1 bis 50 : 1 auf. Es kann vorteilhaft sein, wenn ein Polyamid zur Herstellung des Sinterpulver eingesetzt wird, welches einen Gehalt an Aminoendgruppen von kleiner 40 mmol/kg Polyamid, vorzugsweise kleiner 20 mmol/kg Polyamid und ganz bevorzugt kleiner 10 mmol/kg Polyamid aufweist.

Die Herstellung der geregelten Polyamide wird nachfolgend beschrieben. Die Grundzüge der Herstellung der geregelten Polyamide sind bereits aus DE 44 21 454 und DE 197 08 946 bekannt. In diesen Schriften werden diese Polyamide als Einsatzgranulate für die Umfällung zu Wirbelsinterpulvern beschrieben.

Als Regler eignen sich z. B. lineare, cyclische und verzweigte, organische Mono- und Dicarbonsäuren mit 2 - 30 Kohlenstoffatomen. Als nicht limitierende Beispiele für Dicarbonsäuren seien Bernsteinsäure, Glutarsäure, Adipinsäure, 2,2,4-Trimethyladipinsäure, Korksäure, Sebazinsäure, Dodecandisäure, Brassylsäure, und Terephthalsäure sowie Mischungen entsprechender Dicarbonsäuren genannt. Geeignete Monocarbonsäuren sind beispielsweise Benzoesäure, Buttersäure, Valeriansäure, Capronsäure, Caprylsäure, Caprinsäure, Laurinsäure, Myristinsäure, Palmitinsäure und Stearinsäure. Besonders geeignet sind Mono- oder Dicarbonsäuren, die Kohlenstoffketten mit einer Länge von 6 bis 30 Kohlenstoffatome aufweisen. Damit die Polyamide beim Laser-Sintern problemlos eingesetzt werden können, werden als Regler vorzugsweise keine flüchtigen Carbonsäuren, insbesondere keine Carbonsäuren mit einem Siedepunkt kleiner 150 °C, besonders bevorzugt kleiner 180 °C und ganz besonders bevorzugt kleiner 190 °C eingesetzt. Der Einsatz von flüchtigen Carbonsäuren kann beim Laser-Sintern insbesondere dann störend sein, wenn diese noch nicht in chemisch gebundener Form im Sinterpulver vorliegen, da sie beim Sinterprozess sich Verflüchtigen und durch Qualmen die Laseroptik beeinträchtigen und im schlimmsten Fall das Gerät beschädigen können.

Der Begriff der Mono-, beziehungsweise Dicarbonsäure soll dabei sowohl die funktionelle Gruppe der freien Carbonsäure als auch alle funktionellen Derivate der jeweiligen Carbonsäure umfassen, wie beispielsweise Säurehalogenide, Esterfunktionen, Amidfunktionen, Anhydride, Nitrile oder die entsprechenden Carboxylat-Salze, die unter den Bedingungen einer Polymerisation/Polykondensation jeweils in die freie Carbonsäure umgewandelt werden können.

Der Regler wird vorteilhaft bereits bei der Polymerisation in das Polyamid eingebracht. Die Polymerisation kann dabei sowohl vom jeweiligen Lactam, z. B. Laurinlactam oder von der entsprechenden ω-Aminocarbonsäure, z. B. ω-Aminododecansäure ausgehen.

Es ist aber im Sinne der Erfindung auch möglich, den Regler in der Schmelze oder in fester Phase oder in Lösung mit einem hochmolekularen Polyamid umzusetzen, sofern unter den Reaktionsbedingungen die Aminoendgruppen in dem oben beschriebenen Umfang umgesetzt werden. Die Umsetzung des Polyamids mit dem Regler ist grundsätzlich auch während der Herstellung des Polyamides nach dem in DE 29 06 647 beschriebenen Fällprozess möglich. Bei diesem Fällprozess wird Polyamid 12 in einem Lösungsmittel, vorzugsweise Ethanol, gelöst und unter bestimmten Bedingungen aus dieser Lösung auskristallisiert. Die Zugabe des Reglers kann bei diesem Prozess z. B. in die Lösung des Polyamid 12 erfolgen.

Wird ein Polyamid auf der Basis von Diaminen und Dicarbonsäuren, sog. AABB-Polyamide, eingesetzt, erfolgt die Synthese in bekannter Weise ausgehend von Lösungen der entsprechenden Nylonsalze oder von Schmelzen der Diamine und Dicarbonsäuren. Es kann vorteilhaft sein, wenn die schmelzflüssigen Dicarbonsäuren dabei gegen Verfärbung durch Zugabe von primären Aminen gemäß DE 43 171 89 stabilisiert sind.

Auch beim AABB-Typ wird erfindungsgemäß ein Polyamid mit einem Carboxylendgruppenüberschuss hergestellt, welches 0,01 Teile bis 5 Teile, bevorzugt 0,1 bis 2 Teile einer Mono- oder Dicarbonsäure als Regler aufweist. Vorzugsweise weist das geregelte Polyamid vom AABB-Typ ein Verhältnis von Carboxylendgruppe zu Aminoendgruppe von 2 : 1 oder größer, vorzugsweise von 5 : 1 bis 500 : 1 und besonders bevorzugt von 10 : 1 bis 50 : 1 auf. Auch in diesem Fall kann es vorteilhaft sein, wenn ein Polyamid des AABB-Typs zur Herstellung des Sinterpulver eingesetzt wird, welches einen Gehalt an Aminoendgruppen von kleiner 40 mmol/kg Polyamid, vorzugsweise kleiner 20 mmol/kg Polyamid und ganz bevorzugt kleiner 10 mmol/kg Polyamid aufweist. Zur Regelung können wiederum alle oben genannten Carbonsäuren verwendet werden, wobei beim AABB-Polyamid die zur Regelung verwendete Carbonsäure auch der Dicarbonsäure des Polyamid entsprechen kann.

Das erhaltene, geregelte Polyamid wird granuliert und anschließend entweder vermahlen oder vorteilhaft entsprechend DE 29 06 647, DE 19 708 946 oder DE 4 421 454 (Hüls AG) zu einem Fällpulver verarbeitet.

Die gemäß dem erfindungsgemäßen Verfahren hergestellten zum Laser-Sintern eingesetzten Neupulver auf Basis von Polyamid besitzen typischerweise eine Lösungsviskosität nach ISO 307, mit 1 % Phosphorsäure dotiertem m-Kresol als Lösemittel und 0,5 Gew.-% Polyamid bezogen auf das Lösemittel, von η_{rel.} = 1,4 bis 2,0, bevorzugt eine Lösungsviskosität von η_{rel.} = 1,5 bis 1,8. Beim erfindungsgemäßen Laser-Sinter-Pulver, welches 0,01 Teile bis 5 Teile, bevorzugt 0,1 bis 2 Teile einer Mono- oder Dicarbonsäure als Regler enthält, verändert sich die Lösungsviskosität und der Aminoendgruppengehalt des Rückpulvers gegenüber dem Neupulver kaum, so dass sich das Rückpulver nach Schutzsiebung erneut verarbeiten lässt.

Vorzugsweise bleibt bei dem Rückpulver, erhalten aus dem Einsatz eines erfindungsgemäß hergestellten Neupulvers, ein Gehalt an Aminoendgruppen kleiner 40 mmol/kg Polyamid, vorzugsweise kleiner 20 mmol/kg Polyamid und ganz besonders bevorzugt kleiner 10 mmol/kg Polyamid, entsprechend den jeweils gewählten Vorgaben des Neupulvers, erhalten.

Zur Herstellung des Sinterpulvers kann es vorteilhaft sein eine Mischung zu erzeugen, die neben geregeltem Polyamid-Pulver als Neupulver auch geregeltes Polyamidpulver als Rückpulver aufweist. Ebenso kann als Sinterpulver eine Mischung erzeugt werden, die neben geregeltem Polyamid-Pulver auch ungeregeltes Polyamid-Pulver aufweist. Außerdem kann es vorteilhaft sein, wenn als Sinterpulver eine Mischung hergestellt wird, die neben geregeltem Polyamid auch diverse Füllstoffe wie z. B. Glaspartikel, Keramikpartikel oder Metallpartikel ausgerüstet werden. Typische Füllstoffe sind z. B. Metallgriese, Stahl- oder Glaskugeln.

Die Füllstoffpartikel weisen dabei vorzugsweise eine kleinere oder ungefähr gleich große mittlere Partikelgröße wie die Partikel der Polyamide auf. Vorzugsweise sollte die mittlere Partikelgröße d₅₀ der Füllstoffe die mittlere Partikelgröße d₅₀ der Polyamide um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in der Laser-Sinter-Apparatur. Typischerweise werden Glaskugeln mit einem mittleren Durchmesser von 20 bis 80 µm verwendet.

Das erfindungsgemäße Sinterpulver wird vorzugsweise in einem Verfahren zur Herstellung von Formkörpern durch selektives Laser-Sintern von Sinterpulver, welches dadurch gekennzeichnet ist, dass ein Sinterpulver, welches Polyamid mit einem Carboxylendgruppenüberschuss, ein sogenanntes geregeltes Polyamid aufweist, eingesetzt wird, eingesetzt.

Vorzugsweise weist das eingesetzte Sinterpulver bei diesem Verfahren ein geregeltes Polyamid mit einem Verhältnis von Carboxylendgruppen zu Aminoendgruppen von größer 2 : 1, mit einem Aminoendgruppengehalt kleiner 40 mmol/kg und einer relativen Lösungsviskosität nach ISO 307 von 1,4 bis 2,0 auf. Das Sinterpulver kann Polyamid 11 und/oder Polyamid 12 aufweisen.

Es kann vorteilhaft sein, wenn bei diesem Verfahren ein Sinterpulver eingesetzt wird, welches ein mit Mono- oder Dicarbonsäuren oder Derivaten davon geregeltes Polyamid aufweist. Das Sinterpulver kann ein mit einer oder mehreren linearen, cyclischen oder verzweigten organischen Mono- oder Dicarbonsäuren oder Derivate davon mit 2 bis 30 Kohlenstoffatomen geregeltes Polyamid aufweisen.

Vorzugsweise wird bei dem erfindungsgemäßen Verfahren zum Lasersintern ein Sinterpulver eingesetzt, welches ein Polyamid-Pulver mit einer relativen Lösungsviskosität nach ISO 307 von 1,5 - 1,8 aufweist.

Es hat sich als besonders vorteilhaft erwiesen, wenn bei dem erfindungsgemäßen Verfahren ein Sinterpulver eingesetzt wird, welches die zur Regelung verwendete Carbonsäure mit einem Gehalt von 0,01 bis 5 Gew.-%, vorzugsweise 0,1 bis 2 Gew.-% bezogen auf das eingesetzte Polyamid aufweist und dessen Gehalt an Aminoendgruppen unter 20 mmol/kg, vorzugsweise kleiner 10 mmol/kg Polyamid beträgt.

Das Verfahren kann so durchgeführt werden, dass ein Sinterpulver eingesetzt wird, welches eine Mischung aus geregeltem und ungeregeltem Polyamid-Pulver aufweist, bei welcher der Anteil an geregeltem Pulver von 0,1 bis 99,9 %, vorzugsweise von 5 bis 95 % besonders bevorzugt von 25 bis 75 % beträgt.

Das in dem erfindungsgemäßen Verfahren eingesetzte Sinterpulver, welches ein geregeltes Polyamid aufweist, kann Neupulver, Rückpulver oder ein Gemisch aus Neupulver und Rückpulver sein. Es kann vorteilhaft sein, wenn das Verfahren so durchgeführt wird, das Rückpulver oder Mischungen von Rückpulver und Neupulver, deren Anteil an Neupulver kleiner 50 %, vorzugsweise kleiner 25 % und ganz besonders bevorzugt kleiner 10 % beträgt, aufweisende Sinterpulver eingesetzt werden. Besonders bevorzugt wird Sinterpulver eingesetzt welches mindestens 40 Gew.-% Rückpulver aufweist.

Das eingesetzte Sinterpulver kann außerdem Füllkörper, vorzugsweise anorganische Füllkörper aufweisen. Als solche anorganischen Füllkörper können z. B. Glaspartikel, Keramikpartikel oder Glaskugeln eingesetzt werden.

Durch das erfindungsgemäße Verfahren sowie durch die Verwendung und den Einsatz des erfindungsgemäßen Sinterpulvers sind Formkörper, hergestellt durch selektives Laser-Sintern, die ein geregeltes Polyamid aufweisen, zugänglich. Insbesondere sind Formkörper die ein geregeltes Polyamid 12 aufweisen, zugänglich. Des weiteren sind Formköper erhältlich die eine Mischung aus geregeltem und ungeregeltem Polyamid aufweisen, wobei der Anteil an geregeltem Polyamid in der Polyamid-Mischung 0,1 bis 100 % beträgt.

Die erfindungsgemäßen Formkörper können insbesondere auch dadurch hergestellt werden, dass ein erfindungsgemäßes Sinterpulver als gealtertes Material (Alterung wie oben beschrieben) eingesetzt wird, wobei dieses einen Rekristallisationspeak und eine Kristallisationsenthalpie aufweist, die jeweils nicht kleiner sind als die des nicht gealterten Materials. Vorzugsweise wird ein erfindungsgemäßer Formkörper unter Verwendung eines gealterten Materials eingesetzt, welches einen höheren Rekristallisationspeak und eine höhere Kristallisationsenthalpie als das nicht gealterte Material aufweist. Die Formkörper weisen trotz der Verwendung von Altpulver nahezu die gleichen Eigenschaften auf wie aus Neupulver hergestellte Formkörper.

Formteile, die geregeltes Polyamid, insbesondere geregeltes Polyamid 12 aufweisen, sind wesentlich ökologischer und ökonomischer in ihrer Herstellung, da es möglich ist das gesamte Rückpulver zur Herstellung von Formkörpern einzusetzen.

Folgende Beispiele zum Alterungsverhalten des Polyamid-Pulvers sollen die Erfindung näher beschreiben, ohne sie auf die Beispiele einzuschränken.

### Beispiel 1: Umfällung von ungeregeltem Polyamid 12 (PA 12), gemäß DE-OS 35 10 690

400 kg ungeregeltes, durch hydrolytische Polymerisation von Laurinlactam hergestelltes PA12 mit einer relativen Lösungsviskosität η_{rel.} von 1.60 (in angesäuertem m-Kresol) und mit einem Endgruppengehalt [COOH] = 72 mmol/kg und [NH₂] = 68 mmol/kg werden mit 2500 l Ethanol, vergällt mit 2-Butanon und 1 % Wassergehalt, innerhalb von 5 Stunden in einem 3 m³- Rührkessel (d = 160cm) auf 145 °C gebracht und unter Rühren (Blattrührer, d = 80cm, Drehzahl = 85 Upm) 1 Stunde bei dieser Temperatur belassen.

Anschließend wird die Manteltemperatur auf 124 °C reduziert und unter kontinuierlichem Abdestillieren des Ethanols mit einer Kühlrate von 25 K/h bei derselben Rührerdrehzahl die Innentemperatur auf 125 °C gebracht. Von jetzt an wird bei gleicher Kühlrate die Manteltemperatur 2K bis 3K unter der Innentemperatur gehalten, bis bei 109 °C die Fällung, erkennbar an der Wärmeentwicklung, einsetzt. Die Destillationsgeschwindigkeit wird soweit erhöht, dass die Innentemperatur nicht über 109,3 °C ansteigt. Nach 20 Minuten fällt die Innentemperatur ab, was das Ende der Fällung anzeigt. Durch weiteres Abdestillieren und Kühlung über den Mantel wird die Temperatur der Suspension auf 45 °C gebracht und die Suspension danach in einen Schaufeltrockner überführt. Das Ethanol wird bei 70 °C/400 mbar abdestilliert, und der Rückstand anschließend bei 20 mbar/ 85 °C 3 Stunden nachgetrocknet.

Eine Siebanalyse ergab die folgenden Werte:
< 32µm: 8 Gew.-%
< 40µm: 17 Gew.-%
< 50µm: 26 Gew.-%
< 63µm: 55 Gew.-%
< 80µm: 92 Gew.-%
< 100µm: 100Gew.-%

Das Produkt wies eine Schüttdichte von 433 g/l auf.

### Beispiel 2: Umfällung von geregeltem PA 12

Der Versuch aus Beispiel 1 wurde mit einem PA 12-Granulat wiederholt, das durch hydrolytische LL-Polymerisation in Gegenwart von 1 Teil Dodecandisäure pro 100 Teile Laurinlactam erhalten worden ist: η_{rel.} = 1,55, [COOH] = 132 mmol/kg, [NH₂] = 5 mmol/kg. Mit Ausnahme der Rührerdrehzahl (100Upm) entsprechen die Löse-, Fäll- und Trocknungsbedingungen den in Beispiel 1 gewählten. Das Produkt wies eine Schüttdichte von 425 g/l auf.

Eine Siebanalyse ergab die folgenden Werte:
< 32µm: 8 Gew.-%
< 40µm: 27 Gew.-%
< 50µm: 61 Gew.-%
< 63µm: 97 Gew.-%
< 90µm: 100Gew.-%

### Beispiel 3: (erfindungsgemäß)

Das ungeregelte Polyamid-Pulver aus Beispiel 1 wurde mit dem geregelten Polyamid-Pulver aus Beispiel 2 im Verhältnis 1 : 1 gemischt. Die Mischung hat einen η_{rel.} = 1.58.

### Beispiel 4: (Vergleichsbeispiel)

Das Pulver aus Beispiel 1 wurde mit Glaskugeln (40 - 80µm) als Füllstoff im Verhältnis 3 : 2 versetzt und vermischt.

### Beispiel 5: (erfindungsgemäß)

Analog zu Beispiel 4 wurde das Pulver aus Beispiel 2 mit Glaskugeln (40 - 80µm) als Füllstoff im Verhältnis 3 : 2 versetzt und vermischt.

### Beispiel 6:

Die thermischen Effekte beim Laser-Sintern wurden durch Temperversuche in einem Trockenschrank bei 160 °C im Zeitraffer simuliert. Es wurden die Sinterpulver aus den Beispielen 1 bis 5 eingesetzt. Die ηᵣₑₗ-Werte zur Nachkondensation in Abhängigkeit von der Dauer der Temperversuche sind in Tabelle 1 zusammengefasst:

**Tabelle 1:**

| Temperversuche bei 160 °C im Trockenschrank (Beispiel 6) | | | | |
|---|---|---|---|---|
| Beispiel | ηᵣₑₗ Startpunkt | ηᵣₑₗ nach 1 h | ηᵣₑₗ nach 4 h | ηᵣₑₗ nach 8 h |
| 1 (Vergleich) | 1,60 | 1,82 | 2,20 | 2,30 |
| 2 | 1,55 | 1,55 | 1,58 | 1,62 |
| 3 | 1,58 | 1,62 | 1,74 | 1,79 |
| *mit Glaskugeln* | | | | |
| 4 (Vergleich) | 1,63 | 1,92 | 2,45 | 3,19 |
| 5 | 1,61 | 1,78 | 1,86 | 1,94 |

Anhand der Beispiele kann sehr gut erkannt werden, dass die erfindungsgemäßen Sinterpulver gemäß der Beispiele 2, 3 und 5, die alle ein geregeltes Polyamid aufweisen, einen deutlich geringeren Anstieg der Lösungsviskosität aufweisen, als Sinterpulver gemäß dem Stand der Technik. Die erfindungsgemäßen Sinterpulver weisen auch nach einer Versuchszeit von 8 Stunden eine Lösungsviskosität von kleiner 2 auf, und wären damit als Rückpulver wieder zum Laser-Sintern einsetzbar.

Die nachfolgenden Beispiele 7 und 8 zeigen die Veränderung der Lösungsviskosität von geregeltem und nicht geregeltem Polyamid 12-Pulver in Abhängigkeit von der Bauzeit bei der Durchführung des Laser-Sinterns. Beispiel 8 zeigt die Veränderung der Lösungsviskosität für eine Mischung aus geregeltem und nicht geregeltem Material bei der Durchführung des Laser-Sintems.

### Beispiel 7: (Vergleichsbeispiel)

Ein Sinterpulver wurde gemäß Beispiel 1 hergestellt und in einer Laser-Sinter-Anlage (EOSINT P 350, Firma EOS GmbH, Planegg) eingesetzt. Nach einer Bauzeit von 30 h liegt die Lösungsviskosität bei η_{rel.} = 1,94, nach 65 h bei 2,10.

### Beispiel 8: (erfindungsgemäß)

Ein Sinterpulver wurde gemäß Beispiel 2 hergestellt und in einer Laser-Sinter-Anlage (EOSINT P 350, Firma EOS GmbH, Planegg) eingesetzt. Nach einer Bauzeit von 70 h liegt die Lösungsviskosität des Rückpulvers bei η_{rel.} = 1,59.

Es ist klar zu erkennen, dass das Rückpulver aus Beispiel 8 nach einer Schutzsiebung mit einem Sieb mit einer Maschenweite von 200 µm im Gegensatz zum Rückpulver aus Beispiel 7 direkt wieder zum Laser-Sintern eingesetzt werden kann.

### Beispiel 9: (erfindungsgemäß)

Es wird eine Mischung im Gewichtsverhältnis 1 : 1 aus geregeltem Sinterpulver gemäß Beispiel 2 und nicht geregeltem Material gemäß Beispiel 1 hergestellt und entsprechend der Beispiels 7 und 8 eingesetzt. Die Mischung hat eine Lösungsviskosität von η_{rel.} = 1,57. Nach einer Bauzeit von 45 h beträgt die Lösungsviskosität η_{rel.} = 1,74.

Es ist klar zu erkennen, dass die Mischung aus Sinterpulver mit geregeltem Polyamid und Sinterpulver mit ungeregeltem Polyamid eine wesentlich größere Stabilität der Lösungsviskosität aufweist als das Sinterpulver gemäß Beispiel 7.

### Beispiele 10 a - c (Vergleichsbeispiele), 10 d (erfindungsgemäß): Temperung und thermische Belastung im Rotationskolben:

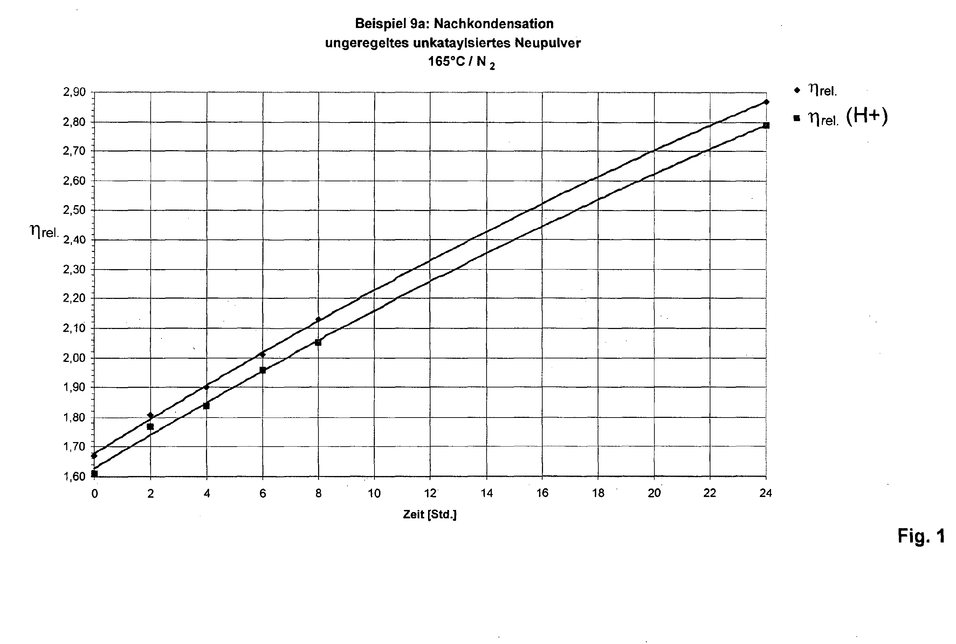

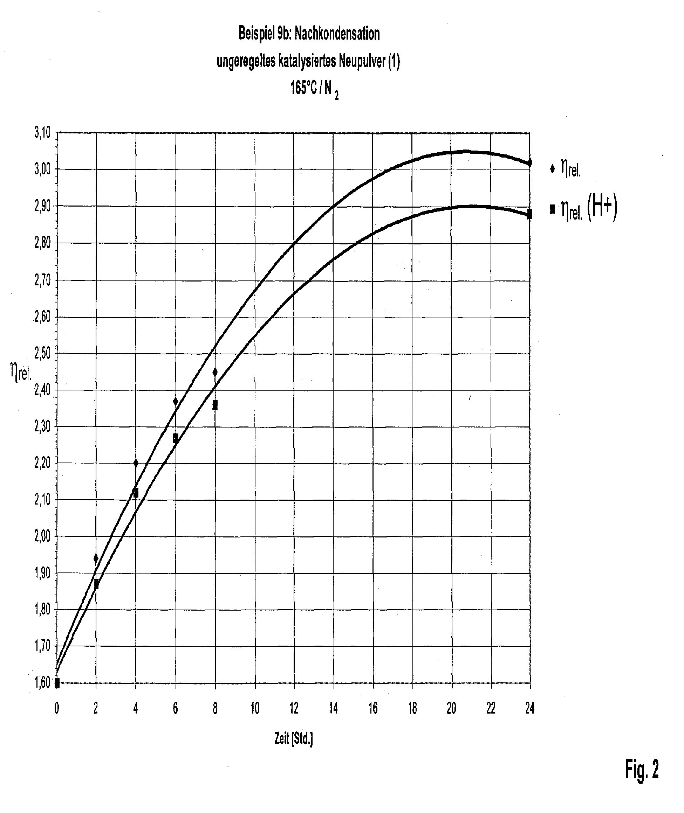

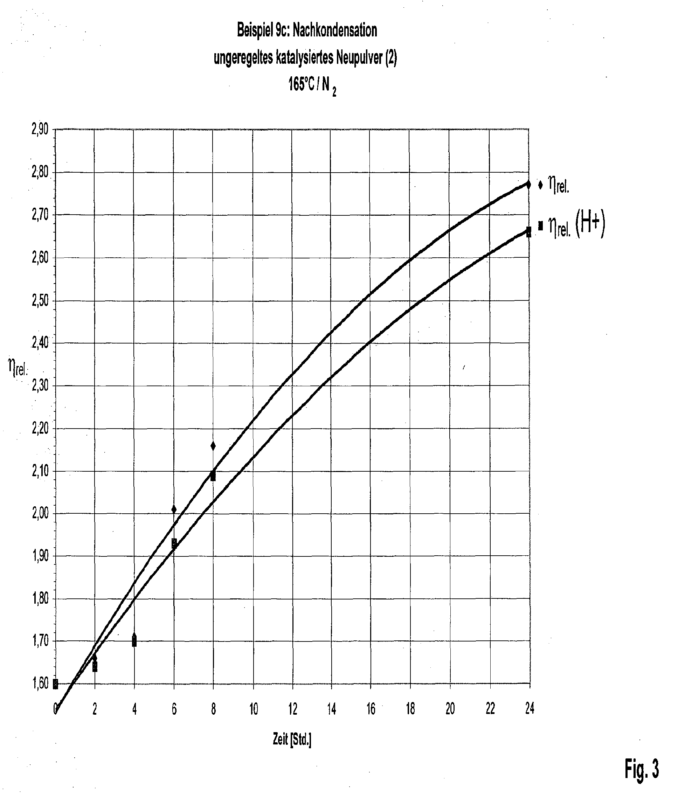

Für Beispiel 10 a wurde ein entsprechend Beispiel 1 hergestelltes Pulver unverändert eingesetzt. Für die Beispiele 10 b und c setzt man während der Trocknung 0,1 Gew.-% hypophosphorige Säure sowie 0,5 Gew.-% Orthophosphorsäure der Suspension zu. Für Beispiel 10 d wird eine Probe gemäß Beispiel 2 mit der gleichen Säureausrüstung versehen. Für die Modellversuche wurde je eine 100 g-Probe der getrockneten Pulver in einem Rotationskolben unter einem konstanten Stickstoffstrom von 5 1/h für 24 Stunden bei 165 °C gehalten. Der Aufbau der Lösungsviskositäten in neutralem bzw. phosphorsäuredotiertem m-Kresol wird verfolgt (Tabelle 2, Fig. 1 - 3) und der Verbrauch an sauren bzw. basischen Endgruppen verglichen (Tabelle 2). Wie anhand der Tabelle und den Figuren Fig. 1 bis 3 zu erkennen ist, verändert nur die erfindungsgemäße Probe gemäß Beispiel 10 d über die gesamte Belastungszeit nicht seine Endgruppengehalte bzw. Lösungsviskosität.

Die Figuren Fig. 1 bis Fig. 3 zeigen den Verlauf der Lösungsviskositäten in Abhängigkeit von Temperdauer. Fig. 1 zeigt die Kurve für das Pulver gemäß Beispiel 10 a. Fig. 2 zeigt die Kurve für das Pulver gemäß Beispiel 10 b. Fig. 3 zeigt die Kurve für das Pulver gemäß Beispiel 10 c. Auf die grafische Darstellung der Ergebnisse von Beispiel 10 d wurde verzichtet, da keine signifikante Änderung der Lösungsviskosität über den Versuchszeitraum festgestellt werden konnte.

**Tabelle 2:**

| Temperversuche bei 165 °C gemäß Beispiel 10: | | | | | | | | |
|---|---|---|---|---|---|---|---|---|
| Probe | Beispiel 10 a | | Beispiel 10 b | | Beispiel 10 c | | Beispiel 10 d | |
| | unkatalysiert ungeregelt | | katalysiert ungeregelt | | Katalysiert ungeregelt | | katalysiert geregelt | |
| Zeit | 0 | 24 | 0 | 24 | 0 | 24 | 0 | 24 |
| η_{rel.} | 1,67 | 2,87 | 1,60 | 3,02 | 1,60 | 2,77 | 1,60 | 1,61 |
| η_{rel.} (H+) | 1,61 | 2,79 | 1,60 | 2,88 | 1,60 | 2,66 | 1,60 | 1,59 |
| COOH | 61,40 | 19,80 | 143,00 | 117,00 | 148,00 | 131,00 | 112,00 | 114,00 |
| | 64,40 | 19,90 | 143,00 | 117,00 | 148,00 | 132,00 | 113,00 | 111,00 |
| NH2 | 59,90 | 11,00 | 54,00 | 2,00 | 57,00 | '0,00 | 8,00 | 7,00 |
| | 60,30 | 11,90 | 54,00 | 2,20 | 57,00 | 2,20 | 9,00 | 11,00 |
| Zeit | 0 | 24 | 0 | 24 | 0 | 24 | 0 | 24 |
| Summe | 123,00 | 31,30 | 197,00 | 119,10 | 205,00 | 132,60 | 121,00 | 121,50 |
| Differenz | 2,80 | 8,40 | 89,00 | 114,90 | 91,00 | 130,40 | 104,00 | 103,50 |

### Beispiel 11: Alterungsversuche

Für eine künstliche Wärmealterung wurde das Pulver aus Beispiel 1 und Beispiel 2 im Vakuumtrockenschrank für 7 Tage bei 135 °C künstlich gealtert.

Zur weiteren Untersuchung von erfindungsgemäßem Pulver wurden sowohl an erfindungsgemäß hergestelltem Pulver als auch an Proben von Bauteilen DSC-Untersuchungen nach DIN 53765 mit einem DSC-Gerät (Perkin Eimer DSC 7) durchgeführt. Die Ergebnisse dieser Untersuchungen sind in Tabelle 3 zusammengefasst.

**Tabelle 3:**

| Ergebnisse der Alterungsversuche | | | | |
|---|---|---|---|---|
| | **Schmelzepeak** | **Schmelzeenthalpie** | **Rekristallisationspeak** | **Kristallisationsenthalpie** |
| | °C | J/g | °C | J/g |
| **Pulver aus Beispiel 2 neu** | 187,5 | 126,6 | 143,4 | 78,4 |
| **Pulver aus Beispiel 2 nach Wärmealterung** | 187,5 | 128,8 | 144,3 | 78,9 |
| **Pulver aus Beispiel 1 neu** | 188,4 | 124,2 | 138,4 | 64,9 |
| **Pulver aus Beispiel 1 nach Wärmealterung** | 192,2 | 124,9 | 133,1 | 59,0 |
| | | | | |

Wie an Hand der Ergebnisse in Tabelle 3 klar zu erkennen ist, weist das erfindungsgemäße Pulver gemäß Beispiel 2 nach dem Alterungsprozess eine Rekristallisationstemperatur (Rekristallisationspeak) auf, die sogar höher ist als die Rekristallisationstemperatur des Neumaterials. Das bekannte ungeregelte Vergleichspulver gemäß Beispiel 1 zeigt hingegen eine deutliche Abnahme der Rekristallisationstemperatur nach Durchlaufen des Alterungsprozesses.

## Patentansprüche

1. Sinterpulver zum selektiven Laser-Sintern,
**dadurch gekennzeichnet,**
**dass** es ein Polyamid mit einem Carboxylendgruppenüberschuss, ein sogenanntes geregeltes Polyamid, aufweist.

2. Sinterpulver nach Anspruch 1,
**dadurch gekennzeichnet,**
**dass** es ein Polyamid aufweist, welches ein Verhältnis von Carboxylendgruppe zu Aminoendgruppe größer 2 : 1, einen Aminoendgruppengehalt unter 40 mmol/kg und eine relative Lösungsviskosität nach ISO 307 von 1,4 bis 2,0 aufweist.

3. Sinterpulver nach Anspruch 1 oder 2,
**dadurch gekennzeichnet,**
**dass** es ein geregeltes Polyamid 12 aufweist.

4. Sinterpulver nach einem der Ansprüche 1 bis 3,
**dadurch gekennzeichnet,**
**dass** es eine Mischung aus geregeltem und ungeregeltem Polyamid aufweist.

5. Sinterpulver nach Anspruch 4,
**dadurch gekennzeichnet,**
**dass** es eine Mischung aus geregeltem und ungeregeltem Polyamid aufweist, wobei der Anteil an geregeltem Polyamid in der Mischung von 0,1 bis 99,9 % beträgt.

6. Sinterpulver nach einem der Ansprüche 1 bis 5,
**dadurch gekennzeichnet,**
**dass** es neben zumindest einem geregelten Polyamid zumindest einen weiteren Füllstoff aufweist.

7. Sinterpulver nach Anspruch 6,
**dadurch gekennzeichnet,**
**dass** es als Füllstoff Glaspartikel aufweist.

8. Sinterpulver nach zumindest einem der Ansprüche 1 bis 7,
**dadurch gekennzeichnet,**
**dass** es von 5 bis 100 % Rückpulver, also nicht belichtetes Pulver aus einem vorangegangenen Lasersinter-Prozess, aufweist.

9. Sinterpulver nach zumindest einem der Ansprüche 1 bis 7,
**dadurch gekennzeichnet,**
**dass** nach Wärmealterung des Pulvers der Rekristallisationspeak und/oder die Kristallisationsenthalpie des Pulvers sich nicht zu kleineren Werten verschiebt.

10. Sinterpulver nach zumindest einem der Ansprüche 1 bis 8,
**dadurch gekennzeichnet,**
**dass** nach Wärmealterung des Pulvers der Rekristallisationspeak und/oder die Kristallisationsenthalpie sich zu größeren Werten verschiebt.

11. Verfahren zur Herstellung von Formkörpern durch selektives Laser-Sintern von Sinterpulver,
**dadurch gekennzeichnet,**
**dass** ein Sinterpulver, welches Polyamid mit einem Carboxylendgruppenüberschuss, ein sogenanntes geregeltes Polyamid aufweist, eingesetzt wird

12. Verfahren nach Anspruch 11,
**dadurch gekennzeichnet**,
das ein Sinterpulver, welches Polyamid mit einem Verhältnis von Carboxylendgruppen zu Aminoendgruppen von größer 2 : 1, mit einem Aminoendgruppengehalt kleiner 40 mmol/kg und einer relativen Lösungsviskosität nach ISO 307 von 1,4 bis 2,0 aufweist, eingesetzt wird.

13. Verfahren nach Anspruch 11 oder 12,
**dadurch gekennzeichnet,**
**dass** ein Sinterpulver eingesetzt wird, welches Polyamid 11 und/oder Polyamid 12 aufweist.

14. Verfahren nach zumindest einem der Ansprüche 11 bis 13,
**dadurch gekennzeichnet,**
**dass** ein Sinterpulver eingesetzt wird, welches ein mit Mono- oder Dicarbonsäuren oder Derivaten davon geregeltes Polyamid aufweist.

15. Verfahren nach Anspruch 14,
**dadurch gekennzeichnet,**
**dass** ein Sinterpulver eingesetzt wird, welches ein mit einer oder mehreren linearen, cyclischen oder verzweigten organischen Mono- oder Dicarbonsäuren oder Derivate davon mit 2 bis 30 Kohlenstoffatomen geregeltes Polyamid aufweist.

16. Verfahren nach einem der Ansprüche 11 bis 15,
**dadurch gekennzeichnet,**
**dass** das eingesetzt Sinterpulver ein Polyamid-Pulver mit einer relativen Lösungsviskosität nach ISO 307 von 1,5 bis 1,8 aufweist.

17. Verfahren nach einem der Ansprüche 11 bis 16,
**dadurch gekennzeichnet,**
**dass** ein Sinterpulver eingesetzt wird, welches die zur Regelung verwendete Carbonsäure mit einem Gehalt von 0,01 bis 5 Gew.-% bezogen auf das eingesetzte Polyamid aufweist und dessen Gehalt an Aminoendgruppen unter 20 mmol /kg Polyamid beträgt.

18. Verfahren nach Anspruch 17,
**dadurch gekennzeichnet,**
**dass** ein Sinterpulver eingesetzt wird, welches die zur Regelung verwendete Carbonsäure mit einem Gehalt von 0,1 bis 2 Gew.-% bezogen auf das eingesetzte Polyamid aufweist und dessen Gehalt an Aminoendgruppen unter 10 mmol/kg Polyamid beträgt.

19. Verfahren nach einem der Ansprüche 11 bis 18,
**dadurch gekennzeichnet,**
**dass** ein Sinterpulver eingesetzt wird, welches eine Mischung aus geregeltem und ungeregeltem Polyamid-Pulver aufweist, bei welcher der Anteil an geregeltem Pulver von 0,1 bis 99,9 % beträgt.

20. Verfahren nach einem der Ansprüche 11 bis 19,
**dadurch gekennzeichnet,**
**dass** das Sinterpulver anorganische Füllkörper aufweist.

21. Verfahren nach Anspruch 20,
**dadurch gekennzeichnet,**
**dass** als Füllkörper Glaskugeln eingesetzt werden.

22. Verfahren nach einem der Ansprüche 11 bis 21,
**dadurch gekennzeichnet,**
**dass** ein Sinterpulver eingesetzt wird, welches von 5 bis 100 % Rückpulver aufweist.

23. Formkörper, hergestellt durch selektives Laser-Sintern von Sinterpulver,
**dadurch gekennzeichnet,**
**dass** der Formkörper ein geregeltes Polyamid aufweist.

24. Formkörper nach Anspruch 23,
**dadurch gekennzeichnet,**
**dass** der Formkörper ein geregeltes Polyamid 12 aufweist.

25. Formkörper nach Anspruch 23,
**dadurch gekennzeichnet,**
**dass** der Formköper eine Mischung aus geregeltem und ungeregeltem Polyamid aufweist und dass das der Anteil an geregeltem Polyamid in der Polyamid-Mischung 0,1 bis 100 % beträgt.

26. Formkörper nach einem der Ansprüche 23 bis 25,
**dadurch gekennzeichnet,**
**dass** der Formkörper unter Verwendung von gealtertem Material hergestellt wird, welches einen Rekristallisationspeak und eine Kristallisationsenthalpie aufweist, die jeweils nicht kleiner sind als die des nicht gealterten Materials.

27. Formkörper nach Anspruch 26,
**dadurch gekennzeichnet,**
**dass** der Formkörper unter Verwendung von gealtertem Material hergestellt wird, welches einen höheren Rekristallisationspeak und eine höhere Kristallisationsenthalpie als das nicht gealterte Material aufweist.

28. Verfahren zur Herstellung von Sinterpulver gemäß zumindest einem der Ansprüche 1 bis 9,
**dadurch gekennzeichnet,**
**dass** als Basismaterial ein geregeltes Polyamidpulver verwendet wird, welches durch eine Behandlung eines ungeregelten Polyamids mit einer Carbonsäure als Regler erhalten wird.

29. Verfahren nach Anspruch 28,
**dadurch gekennzeichnet,**
**dass** die Behandlung durch Umsetzen des ungeregelten Polyamids während der Polymerisation erfolgt.

30. Verfahren nach Anspruch 28,
**dadurch gekennzeichnet,**
**dass** die Behandlung des ungeregelten Polyamids durch Umsetzen eines hochmolekularen Polyamids mit einem Regler in der Schmelze, in fester Phase oder in Lösung erfolgt.
